Europäisches Patentamt

(19) European Patent Office    (11) Publication number: **0 200 546**

Office européen des brevets    **B1**

(12) **EUROPEAN PATENT SPECIFICATION**

(45) Date of publication of patent specification: **26.09.90**    (51) Int. Cl.⁵: **C 09 D 5/08,** B 05 D 3/10,
                                                                      C 23 C 22/00,  F 28 F 19/04
(21) Application number: **86303282.7**

(22) Date of filing: **30.04.86**

(54) Method of protecting a metal surface.

(30) Priority: **30.04.85 JP 92932/85**

(43) Date of publication of application:
   **05.11.86 Bulletin 86/45**

(45) Publication of the grant of the patent:
   **26.09.90 Bulletin 90/39**

(84) Designated Contracting States:
   **DE GB IT**

(56) References cited:
   **AT-B- 335 245**
   **AT-B- 335 249**
   **AT-B- 346 989**
   **DE-A-2 515 007**

   **H.KITTEL "Lehrbuch der Lacke und
   Beschichtungen" Band III, 1976 Verlag W A
   Colomb in der H Heenemann GmbH, Berlin-
   Oberschwandorf**

   **H.KITTEL "Lehrbuch der Lacke und
   Beschichtungen", Band II, 1974 Verlag W A
   Colomb in der H Heeneman GmbH, Berlin-
   Oberschwandorf**

(73) Proprietor: **NIPPONDENSO CO., LTD.**
   **1-1, Showa-cho**
   **Kariya-shi Aichi-ken (JP)**
(73) Proprietor: **NIHON PARKERIZING CO., LTD.**
   **15-1, 1-Chome, Nihonbashi**
   **Chuo-ku Tokyo 103 (JP)**

(72) Inventor: **Ohara, Toshio**
   **1-11, Ikeda-cho**
   **Kariya-shi Aichi-ken (JP)**
   Inventor: **Takahashi, Toshio**
   **7-4, Nadaka Yokone-cho**
   **Oubu-shi Aichi-ken (JP)**
   Inventor: **Nishikawa, Masayoshi**
   **1-52, Tsutsubayashi Noda-cho**
   **Kariya-shi Aichi-ken (JP)**
   Inventor: **Niwa, Tutomu**
   **70-2, Torii Kamishigehara-cho**
   **Chirya-shi Aichi-ken (JP)**
   Inventor: **Ogino, Takao**
   **1-111, Maeda Heights 511-2, Maeda-cho
   Totsuka-ku**
   **Yokohama-shi Kanagawa-ken (JP)**
   Inventor: **Sako, Ryosuke**
   **Nihon Parkerizing Ichikawa Dorm. 27-3, 1-chome
   Motokitakata Ichikawa-shi Chiba-ken (JP)**

**EP 0 200 546 B1**

(72) Inventor: **Kaneko, Hideaki**
**20-1, 2-chome, Rokugatsu Adachi-ku**
**Tokyo (JP)**

(74) Representative: **Zumstein, Fritz, Dr. et al**
**Dr. F. Zumstein Dr. E. Assmann Dipl.-Ing. F.**
**Klingseisen Bräuhausstrasse 4**
**D-8000 München 2 (DE)**

## Description

This invention relates to a method of protecting an aluminum surface from corrosion. The invention further relates to a method of producing such an aluminum heat exchanger. A heat exchanger produced in accordance with this invention has a preferred usage as an evaporator for a refrigerant circuit, such as the evaporator of an automobile air conditioner. The term aluminum in this specification includes aluminum alloys as well as aluminum.

One problem with such evaporators is that moisture condenses to form drops on the surface thereof which hinder the air flow through the evaporator. The drops held in the evaporator reduce its heat exchanging efficiency, and also the drops cause the problem of being scattered toward downstream of air flow.

The drops held between fins of the evaporator cause corrosion of the fins.

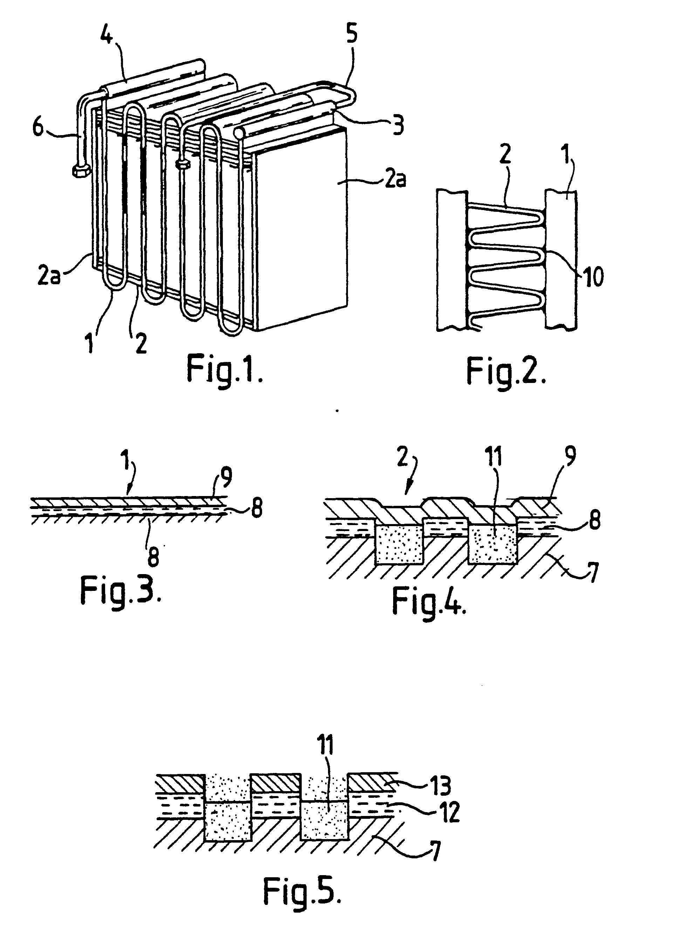

Recently, aluminum heat exchangers have been given a protective surface treatment in order to provide an effective resistance to corrosion and preferably hydrophilicity. One embodiment of this surface treatment is explained hereinafter. Conventional protective surface treatments such as chromium phosphating which improve corrosion resistance are illustrated in Fig. 5 in which the aluminum 7 (shown in Fig. 5) which is used as the fin is covered with the protective coating 12. After the protective coating 12 has been applied, inorganic material such as silica particles, as silicate, which provides an effective hydrophilic property, is so coated over the protective coating 12 so that a coating 13 of inorganic material is made.

However, known methods have the problem that the inorganic material is easily removed after the heat exchanger has been used for a while, so that the inorganic material has a tendency to be dispersed as particles. The hydrophilic efficiency and the resistance to corrosion is, therefore, reduced. Furthermore, the particles of the inorganic material cause irritation of the operator's nose and makes them feel umcomfortable.

Conventionally aluminum heat exchangers have fins which are covered by an Al-Si type brazing material containing a high proportion of silicon in order to braze the tube and the fin. Therefore, eutectic crystals 11 (shown in Fig. 5) of aluminum and silicon are left on the surface of the aluminum of the fin after brazing. Since the protective coating 12 is difficult to deposit on the eutectic crystals 11, the problems described above become more serious.

The object of the present invention is to solve such problems. Another object of this invention is to reduce the scattering of the particles even after the heat exchanger is used for a long while. A further object of this invention is to provide an aluminum heat exchanger which has an effective hydrophilic property (wettability) and the resistance to corrosion. A still further object of this invention is to provide a preferred method for producing such an aluminum heat exchanger.

According to one aspect of the invention there is provided a method of protecting a metal surface from corrosion by:

forming a protective coating on said metal surface;

applying to said protective coating a polymerisable cationic organic material in an aqueous medium by precipitation or deposition in the presence of polyvalent metal ions, and

polymerizing said material by heating to form a polymer coating over said protective coating.

The metal may be aluminum, aluminum A1050 or A3003 or an aluminum alloy containing copper, manganese or tin.

The organic material preferably has at least one carboxyl, hydroxyl or polyamide group in its structure.

Chemical treatments which may be employed in this invention to produce the protective coating include the alkaline-chromate method, chromate method, chromium phosphate method or zinc phosphate method, which are known surface treatment methods for aluminum: the titanium phosphate or zinconium phosphate coating treatment which is used to form a chromium free protective coating or the chromic acid containing resin coating treatment method.

The aluminum heat exchanger produced in accordance with this invention can have various usages. An automatic heat exchanger is required to be compact, light and have a high heat exchanging efficiency, and also the environment in which the heat exchanger is used is very severe.

Therefore, the automobile heat exchanger requires the coating to have high resistance to corrosion and the uniform treatment of which should be reached inside of a complex shaped heat exchanger. The chemical treatment for producing the protective coating involving chromic acid is most preferable in order to attain the above requirements.

After the protective coating is formed on the aluminum heat exchanger, the heat exchanger may be immersed in an aqueous medium of a polymerisable cationic organic material for making polymer coating.

Preferred polymerisable cationic organic materials for use in the invention include high molecular weight polymer resins having a high number of amino groups ($-NR_2$:R means H, OH or Alkyl) per molecule.

Materials having $-NR_2$ in their structure become cationic $-NHR_2^+$ in the presence of inorganic acid or organic acid, in aqueous solution, so that the materials can be in the water solution.

The material being cationic and dissolved or dispersed in the water then loses its charge when it is immersed in the alkaline solution or a solution involving an anion component, so that the material precipitates or deposits in the presence of polyvalent metal ions, the material is coagulated. A

3

polymerisable cationic organic material in an aqueous medium is applied over the protective coating consisting of polyvalent metal ions such as zinc, chromium or aluminum, and anions such as phosphate ion or chromate ion. When the base metal such as aluminum or the protective coating is dissolved in a corrosive atmosphere, such polyvalent metal ions or anions are so combined with organic material that the organic material becomes hard to disperse.

Such a polymer coating has wettability. Carboxyl, hydroxide or amino groups may be introduced in the structure of the organic material in order to improve its wettability. Water soluble polyamide resins, polyethylene imines, cationic high polymer surface activating agent and other resins which are used for cathodic electrodeposition painting may be used as the resin of this invention. Water soluble polyamide resins are preferred.

The corrosion resistance imparted by a polymer coating which is formed over the metal surface, which has already received a protective surface treatment is more effective than that of a single film of a single resin. The solution of this invention is prepared by adding a salt of a tetravalent metal such as silicon, zirconium, titanium or tin into the aqueous medium containing the polymerisable cationic organic material resin, and is adjusted within the pH range 2—7 by means of inorganic acid or organic acid.

Phosphoric acid is the most effective within a plurality of inorganic acids which can be used in this invention. A variety of monobasic acids, dibasic acids or polybasic acids can be used as the organic acid.

The temperature of the solution of this invention is controlled between room temperature and 80°C. The temperature is normally controlled under room temperature (10—40°C), the temperature may be increased in order to enhance the reaction rate. The temperature however, should be controlled under 80°C in order to prevent the evaporation of the water and a change in the concentration of the solution.

A polymer coating involving cationically charged colloidal silica which can disperse uniformly within the aqueous medium containing the polymerisable organic cationic material of this invention can improve the resistance to corrosion and the wettability.

Bacteria have the tendency to grow in the heat exchanger because of the high humidity and condensed water, and dust from the air also tends to deposit on the heat exchanger because of the complex shape of which, so that the bacteria and the dust may produce a bad smell. Therefore it is preferred to include a bactericide in the polymer coating in order to prevent overgrowth of the bacteria on the surface of the heat exchanger due to high humidity. A deodorant or an aromatic agent may be added to the organic polymer coating in order to remove the bad smell.

According to another aspect of the invention there is provided a method of producing an aluminum heat exchanger which comprises the steps of:

assembling aluminum tubes and fins to form a heat exchanger;

immersing the heat exchanger in an aqueous solution of the protective coating so that a protective coating is formed on the surface of the aluminum tubes and fins;

immersing the heat exchanger coated with the protective coating in an aqueous medium containing a polymerisable cationic material and polymerizing said material to form a polymer coating over the protective coating.

A preferred embodiment of the invention will now be described by way of example with reference to the accompanying drawings in which:

Fig. 1 is a perspective view of an evaporator for an automobile air conditioner;

Fig. 2 is an enlarged front view of a part of the evaporator shown in Fig. 1;

Fig. 3 is an enlarged sectional view of a part of a tube 1 shown in Fig. 2;

Fig. 4 is an enlarged sectional view of a part of a fin 2 shown in Fig. 2; and

Fig. 5 is an enlarged sectional view of a part of a fin produced by a conventional process.

Fig. 1 shows a heat exchanger for use as an evaporator of an automobile air conditioner. Numeral 1 shows a flat tube having many holes therein, the tube 1 is formed by extrusion and is bent in a serpentine shape. The tube 1 is made of aluminum such as A1050, A3003 or aluminum alloys made by adding a little Cu, Mn or Fe into A1050 or A3003.

Numeral 2 shows corrugated fins made of aluminum such as A1050, A3003 or aluminum alloys made by adding a little of Sn, Zn or In into A1050 or A3003.

Brazing material such as A4004 or A4343 is cladded on both sides of the fin 2 in order to braze between the tube 1 and the fin 2. Brazing material should cover the outer surface of the tube 1 when the material of the fin 2 has no brazing material thereon. Numeral 2a shows end plates connected with the most outer ends of the fin 2.

In use, coolant is supplied by a pipe 5 to an inlet header 3 for distributing coolant into the tube 1, is connected at an inlet portion of the tube 1 and an outlet header 4 for collecting the coolant after it has flowed through the tube 1, discharges through an outlet pipe 6. The pipes 5 and 6, headers 3 and 4 and fins 2 are all made of aluminum.

The aluminum heat exchanger shown in Fig. 1, often referred to as the serpentine type heat exchanger, is then placed in a furnace having an inert gas atmosphere or an evacuated furnace and is brazed to form joint 10 as shown in Fig. 2.

After brazing the outer surface of the heat exchanger is cleaned by rinsing in water. After cleaning a protective coating and a polymer coating is applied to the outer surface of the heat exchanger by a surface treatment as described hereinafter with reference to examples.

### Example 1

The cleaned heat exchanger is immersed for about two minutes in an aqueous solution containing 72 g/l of a chromic/chromate protective material for aluminum such as Bonderite 713 (Registered trade mark) produced by Nihon Parkerizing Co. Ltd. so producing on the heat exchanger surface a chromic/chromate protective coating. The amount of the chromium deposited during this operation is about 100 mg/m².

After rinsing in water, the heat exchanger was then immersed in an aqueous solution at about 30°C, containing 20 g/l of a water soluble cationic polyamide resin such as AQ Nylon (Trade Mark of Toray Industries Inc.). Phosphoric acid is added to adjust the pH to 3.

The organic material coating is then baked for about 30 minutes at a temperature of 120°C so that a polyamide resin polymer coating of about 0.5 g/m² is formed over the chromium coating.

Fig. 3 shows the chromic/chromate protective coating 8 and polyamide resin coating 9 over the tube 1 which is not cladded by the brazing material.

Fig. 4 shows the chromic/chromate protective coating 8 and water soluble polyamide resin coating 9 over the fin 2 which is cladded by the brazing material. Numeral 7 in Fig. 4 shows the aluminum of the heat exchanger, numeral 11 shows eutectic crystalline aluminum and silicon in the brazing material.

A salt spray test according to JIS Z-2371 used to check the corrosion resistance of the aluminum heat exchanger treated as described above revealed that 5% of white oxide occurred after about 200 hours. The hydrophilic property was evaluated by measuring a contact angle of the surface of the heat exchanger with water. The goniometer gauge indicated a contact angle of 10 degree which is a good result, and the contact angle with water was not increased even after 1 month laying in the room.

The contact angle with water is not also increased even after the heat exchanger of this invention is immersed in a flow of water. Therefore, the heat exchanger of this invention can maintain good wettability for a long while without deterioration. Furthermore, the aluminum heat exchanger after the flow water immersion test can be used as the evaporator for an automobile air conditioning system, as the evaporator did not scatter the condensed water and also did not generate a bad smell.

The test result of this test 1 is shown in Table 1.

### Comparative example 1

A single coating layer of chromate protective coating prepared as in Example 1, afforded slightly better resistance to corrosion than the coating of Example 1, however, ageing produced an increase in the contact angle with water so reducing the wettability of the heat exchanger as compared with the heat exchanger treated as described in Example 1.

When the heat exchanger produced in Example 1 was used as the evaporator for an automobile air conditioning system after the water flow immersion test of Example 1, the condensed water from the evaporator scatter as water drops into the surroundings.

### Example 2

The cleaned heat exchanger is immersed for about one minute in a solution for forming chromium phosphate protective coating for aluminum (Bonderite$^R$ 701 AB 48 g/l and Bonderite$^R$ 701 AC 27 g/l produced by Nihon Parkerizing Co. Ltd.) the temperature of which is about 50°C so that a chromium phosphate coating of about 150 mg/m² as chromium is formed. After rinsing in water the heat exchanger is then immersed in an aqueous solution of pH 6.5, and at a temperature of 35°C, which contains 20 g/l of quaternary compound of the copolymer of vinylpyrrolidone and dimethyl amino ethyl methacrylate (Cationic acrylic resin, trade name Copolymer 937 produced by GAF corp.). Then the polymer coating is baked for about 30 minutes in a hot air oven at 120°C, so that a polymer coating of about 0.5 g/m² is formed over the chromium phosphate conversion coating.

The test result of the aluminum heat exchanger of this example tested in Example 1 is shown in the Table 1.

### Comparative example 2

A single coating layer of chromium phosphate protective coating which is formed by the same process as that of Example 2 has an increased water contact angle with water after aging, as shown in Table 1, namely, the wettability of comparative Example 2 becomes reduced.

When the heat exchanger of this Comparative Example 2 is used as the evaporator of automobile air conditioner, the evaporator generates a bad smell and the condensed water is scattered from the evaporator like the heat exchanger of Comparative Example 1.

### Example 3

After forming a chromic/chromate protective coating by the same process as Example 1, the heat exchanger is rinsed in water. The heat exchanger is then immersed in a 20 g/l aqueous solution of water-soluble polyamide resin solution of pH 3 (adjusted with phosphoric acid) at a temperature of 30°C and which contains 6 g/l of a hydrofluo zirconic complex. After that, the resin coating is baked in a hot air oven for about 30 minutes at 120°C, so that a polymer coating of about 0.3 g/m² is formed.

The test results of the aluminum heat exchanger produced by this process and tested by the same tests described above is shown in Table 1.

As shown in Table 1, the corrosion of the resistance of the heat exchanger of Example 3 is better than that of Example 1.

Examples 4—6

After forming a chromic/chromate protective coating on the surface of each of three heat exchangers by the same process as that shown in Example 1, the heat exchangers were rinsed in water. The heat exchangers were then immersed in one of 3 types of aqueous solution, each containing 20 g/l of a water soluble polyamide resin the first of which contained cationically charged dispersive colloidal silica (Snowtex[R] AK, by Nissan Kagaku) at 2 g/l; the second of which contained the same cationically charged dispersive colloidal silica at 5 g/l, and the third of which contained the same cationically charged dispersive colloidal silica at 10 g/l. After immersing the heat exchangers in these 3 types respective solutions, the heat exchangers were then carried into the hot air oven and baked for about 30 minutes under 120°C, so that polymer coatings including colloidal silica of about 0.3, about 0.4 and about 0.5 g/m$^2$ were formed respectively.

The test results of the aluminum heat exchanger produced by this process are shown in Table 1.

Comparative examples 3—5

Three heat exchangers having chromic/chromate protective coatings formed by the same process as shown in Example 1 were immersed in one of three anionic dispersive acrylic resin emulsions (Tocryl[R] N-142 produced by Toyo Ink Mfg.) having a resin solid content of 20 g/l, additionally containing anionically charged dispersive colloidal silica (Snowtex[R] O produced by Nissan Kagaku); the first of which contained 5 g/l the second of which contained 10 g/l and the third of which contained 20 g/l. The heat exchangers were immersed in these 3 types of solution, the heat exchangers were then carried into the hot air oven and baked for about 30 minutes under 120°C so that polymer coatings including colloidal silica of about 0.4 and about 0.5 and about 0.6 g/m$^2$ respectively were formed.

The test results of the aluminum heat exchangers of these examples are shown in Table 1. As shown in Table 1, the ratio of colloidal silica and resin is required to be high in order to improve the wettability. Higher amounts of added colloidal silica, however, may increase the discomfort of the operator.

Example 7

After forming a chromium phosphate protective coating on the surface of a heat exchanger by the same process as shown in Example 2, the heat exchanger is rinsed in water. The heat exchanger is then immersed in an aqueous solution which is prepared by dissolving 10 g/l hydrofluoro titanium complex, adjusting the pH to 3.5 with oxalic acid, and adding a bactericide and deodorant to the water soluble high molecular weight, polyamide resin solution of 20 g/l which is used in Example 1. After immersing in the solution the heat exchanger is carried into the hot air oven and baked for about 3—5 minutes at 120°C so that an organic high molecular weight polymer coating of about 0.4 g/m$^2$ is formed.

The test results of the heat exchanger of this example is shown in Table 1.

Even after 6 months use as the evaporator of an automobile air conditioner, the heat exchanger did not generate any bad smell, so the heat exchanger of this example shows an enhanced performance result compared with that of Example 2.

The heat exchanger produced by the process shown in Example 2 generates a bad rotten smell after 6 months use as the evaporator of an automobile air conditioner.

Though the heat exchanger shown in Figs. 1 and 2 is assembled of flat tube 1 and corrugated fin 2, the present invention can be used as a heat exchanger other than that shown in Figs. 1 and 2. The present invention can be used as a heat exchanger which comprises tubes and plate fins or other heat exchanger which comprises a plurality of tubes formed by a couple of plates and corrugate fins, and the other type of the heat exchanger having fins made from flat tubes integrally. As described above, the present invention can maintain a good hydrophilic property and high resistance to corrosion for a long while, and the heat exchanger of this invention will not generate a bad smell.

Whilst the invention has been described solely with reference to the treatment of aluminum heat exchangers it will be appreciated that the method of treatment disclosed may be applicable to all metal surfaces.

TABLE 1

| | Protective coating | Polymer coating | |
|---|---|---|---|
| Example 1 | Chromic/chromate | Water soluble polyamide resin | |
| Comparative example 1 | Chromic/chromate | — | |
| Example 2 | Chromium/phosphate | Cationic acrylic resin | |
| Comparative example 2 | Chromium phosphate | — | |
| Example 3 | Chromic/chromate | Water soluble polyamide zirconium complex | |
| Example 4 | Chromic/chromate | Water soluble polyamide silica | 2 g/l |
| Example 5 | ,, | ,, | 5 g/l |
| Example 6 | ,, | ,, | 10 g/l |
| Comparative example 3 | ,, | Acrylic resin silica | 5 g/l |
| Comparative example 4 | ,, | ,, | 10 g/l |
| Comparative example 5 | ,, | ,, | 20 g/l |
| Example 7 | Chromium phosphate | Water soluble polyamide-titanium complex | |
| | | Bactericide deodorant | |

in Table I

Corrosion resistance: time (hours) required for 5% white corrosion to occur when treated by the salt spray test according to JIS-2371

Contact angle of water: measured by goniometer gauge

early stage: result occurred within 6 hours after coating treatment.

laying in room: contact angle measured after 1 month (30 days) laying in room.

water flow immersion: contact angle measured in dry condition after 1 month in water flow.

# EP 0 200 546 B1

TABLE 1 (continued)

| Corrosion resistance | Contact angle of water | | | Uncomfortable condition bad smell, etc. generated while using |
| --- | --- | --- | --- | --- |
| | Early stage | Laying in room | Water flow immersion | |
| 200 hours | less than 10° | less than 10° | less than 10° | rare |
| 240 hours | 10—20° | 70—80° | 50—70° | slight |
| 96 hours | less than 10° | less than 10° | less than 10° | rare |
| 120 hours | 10° | 40—50° | 30—50° | much |
| 240 hours | less than 10° | less than 10° | less than 10° | rare |
| 240 hours | less than 10° | less than 10° | less than 10° | rare |
| 240 hours | less than 10° | less than 10° | less than 10° | rare |
| 240 hours | less than 10° | less than 10° | less than 10° | slight |
| 240 hours | 60° | 60° | 60° | rare |
| 240 hours | 50—60° | 50—60° | 50—60° | slight |
| 240 hours | 30—40° | 30—40° | 30—40° | much |
| 120 hours | less than 10° | less than 10° | less than 10° | rare |

## Claims

1. A method of protecting an aluminum surface from corrosion by forming a protective coating on said metal surface by the alkaline chromate method, the chromate method, the chromium phosphate method, the zinc phosphate method, the titanium phosphate method, the zirconium phosphate method or the chromic acid resin method, which protective coating comprises a chromium phosphate coating and a chromium/chromic/chromate phosphate coating, characterized by applying to said protective coating a polymerisable cationic organic material in an aqueous medium by precipitation or deposition in the presence of polyvalent metal ions and polymerizing said material by heating to form a polymer coating over said protective coating.

2. A method according to Claim 1, in which the metal is aluminum, aluminum A1050 or A3003, or an aluminum alloy containing copper, manganese or tin.

3. A method according to Claim 1 or 2, in which the organic material has at least one carboxyl, hydroxyl or polyamide group.

4. A method according to any preceding Claim in which the polymer is an acrylic resin or polyamide.

5. A method according to any preceding Claim, in which the polymer coating further includes colloidal silica, a bactericide or a deodorant.

6. A method according to any preceding Claim, in which the protective coating is formed by immersing the metal in an aqueous medium containing the polymerisable, cationic, organic material.

7. A method according to Claim 10 in which the aqueous medium is adjusted to a pH of 2—7.

8. A method according to Claim 6 or 7, in which the aqueous medium further includes cationically charged colloidal silica.

9. A method according to any preceding Claim, in which the metal surface is that of an aluminum heat exchanger, comprising aluminium tubes and aluminium fins.

10. A method of producing an aluminium heat exchanger which comprises the steps of:

assembling aluminium tubes and fins to form a heat exchanger;

immersing the heat exchanger in an aqueous solution of a protective coating to be formed on the surface of the aluminium tubes and fins by the alkaline chromate method, the chromate method, the chromium phosphate method, the zinc phosphate method, the titanium phosphate method, the zirconium phosphate method or the chromic acid resin method, which protective coating comprises a chromium phosphate coating and a chromium/chromic/chromate phosphate coating;

immersing the heat exchanger coated with the protective coating in an aqueous medium containing a

8

polymerisable cationic organic material for precipitating or depositing it in the presence of polyvalent metal ions and polymerising said material by heating to form a polymer coating over the protective coating.

**Patentansprüche**

1. Verfahren zum Schützen einer Aluminiumoberfläche vor Korrosion durch Ausbilden einer Schutzschicht auf der Metalloberfläche durch die alkalische Chromatmethode, die Chromatmethode, die Chromphosphatmethode, die Zinkphosphatmethode, die Titanphosphatmethode, die Zirkoniumphosphatmethode oder die Chromsäure-Harz-Methode, wobei die Schutzschicht eine Chromphosphatschicht und eine Chrom-/Chromi-/Chromat-Phosphat-Schicht umfaßt, dadurch gekennzeichnet, daß man auf die Schutzschicht ein polymerisierbares kationisches organisches Material in einem wäßrigen Medium durch Ausfällung oder Abscheiden in Gegenwart mehrwertiger Metallionen und Polymerisation des Materials durhc Erhitzen zur Bildung einer Polymerenschicht über der Schutzschicht aufbringt.

2. Verfahren gemäß Anspruch 1, bei dem das Metall Aluminium, Aluminium A1050 oder A3003 oder eine Kupfer, Mangan oder Zinn enthaltende Aluminiumlegierung ist.

3. Verfahren gemäß Anspruch 1 oder 2, bei dem das organische Material zumindest eine Carboxy-, Hydroxyl- oder Polyamidgruppe aufweist.

4. Verfahren gemäß einem der vorhergehenden Ansprüche, bei dem das Polymere ein Acrylharz oder Polyamid ist.

5. Verfahren gemäß einem der vorhergehenden Ansprüche, bei dem die Polymerenschicht weiterhin kolloidals Siliciumdioxid, ein Bakterizid oder ein desodorierendes Mittel enthält.

6. Verfahren gemäß einem der vorhergehenden Ansprüche, bei dem die Schutzschicht durch Eintauchen des Metalls in ein wäßriges Medium, das das polymerisierbare kationische organische Material enthält, gebildet wird.

7. Verfahren gemäß Anspruch 6, bei dem das wäßrige Medium auf einen pH-Wert von 2 bis 7 eingestellt wird.

8. Verfahren gemäß Anspruch 6 oder 7, bei dem das wäßrige Medium außerdem kationisch geladenes kolloidales Siliciumdioxid enthält.

9. Verfahren gemäß einem der vorhergehenden Ansprüche, bei dem die Metalloberfläche diejenige eines Aluminium-Wärmeaustauschers ist, der Aluminiumrohre und Aluminiumrippen enthält.

10. Verfahren zur Herstellung eines Aluminium-Wäremeaustauschers, das die folgenden Stufen umfaßt:

die Anordnung von Aluminiumrohren und -rippen, um einen Wäremeaustauscher zu bilden;

das Eintauchen des Wärmeaustauschers in eine wäßrige Lösung einer auf die Oberfläche der Aluminiumrohre und -rippen durch die alkalische Chromatmethode, die Chromatmethode, die Chromphosphatmethode, die Zinkphosphatmethode, die Titanphosphatmethode, die Zirkniumphosphatmethode oder die Chromsäure-Harz-Methode aufzubringenden Schutzschicht, wobei die Schutzschicht eine Chromphosphat und eine Chrom-/Chromi-/Chromat-Phosphat-Schicht umfaßt:

das Eintauchen des mit der Schutzschicht überzogenen Wärmeaustauschers in ein wäßriges Medium, welches ein polymerisierbares kationisches organisches Material zu dessen Ausfällung oder Abscheidung in Gegenwart mehrwertiger Metallionen enthält, und die Polymerisation dieses Materials durch Erhitzen zur Bildung einer Polymerischicht über der Schutzschicht.

**Revendications**

1. Procédé de protection d'une surface en aluminium contre la corrosion, par formation d'un revêtement protecteur sur ladite surface métallique par le procédé au chromate alcalin, le procédé au chromate, le procédé au phosphate de chrome, le procédé au phosphate de zinc, le procédé au phosphate de titane, le procédé au phosphate de zirconium ou le procédé à la résine contenant de l'acide chromique, lequel revêtement protecteur comprend un revêtement de phosphate de chrome et un revêtement de phosphate de chrome/chromique/chromate, caractérisé par l'application sur ledit revêtement protecteur d'une matière organique cationique polymérisable dans un milieu aqueux par précipitation ou dépôt en présence d'ions métalliques polyvalents et la polymerisation de ladite matière par chauffage pour former un revêtement polymère sur ledit revêtement protecteur.

2. Procédé selon la revendication 1, dans lequel le métal est l'aluminium, l'aluminium A 1050 ou A 3003, ou un alliage d'aluminium contenant du cuivre, du manganèse ou de l'étain.

3. Procédé selon la revendication 1 ou 2, dans lequel la matière organique comporte au moins un groupe carboxyle, hydroxyle ou polyamide.

4. Procédé selon l'une quelconque des revendications précédentes, dans lequel le polymère est une résine acrylique ou un polyamide.

5. Procédé selon l'une quelconque des revendications précédentes, dans lequel le revêtement polymère comprend en outre de la silice colloïdale, un bactéricide ou un désodorisant.

6. Procédé selon l'une quelconque des revendications précédentes, dans lequel le revêtement

9

protecteur est formé par immersion du métal dans un milieu aqueux contenant la matière organique cationique polymérisable.

7. Procédé selon la revendication 10, dans lequel le milieu aqueux est réglé à un pH de 2 à 7.

8. Procédé selon la revendication 6 ou 7, dans lequel le milieu aqueux contient en outre de la silice colloïdale chargée cationiquement.

9. Procédé selon l'une quelconque des revendications précédentes, dans lequel la surface métallique est celle d'un échangeur de chaleur en aluminium comprenant des tubes en aluminium et des ailettes en aluminium.

10. Procédé de production d'un échangeur de chaleur en aluminium qui comprend les étapes suivantes:

assemblage de tubes et d'ailettes en aluminium pour former un échangeur de chaleur, immersion de l'échangeur de chaleur dans une solution aqueuse d'un revêtement protecteur qui doit être formé sur la surface des tubes et ailettes en aluminium par le procédé au chromate alcalin, le procédé au chromate, le procédé au phosphate de chrome, le procédé au phosphate de zinc, le procédé au phosphate de titane, le procédé au phosphate de zirconium ou le procédé à la résine contenant de l'acide chromique, lequel revêtement protecteur comprend un revêtement de phosphate de chrome et un revêtement de phosphate de chrome/chromique/chromate; immersion de l'échangeur de chaleur recouvert du revêtement protecteur dans un milieu aqueux contenant une matière organique cationique polymérisable en vue de sa précipitation ou de son dépôt en présence d'ions métalliques polyvalents, et polymérisation de ladite matière par chauffage pour former un revêtement polymère sur le revêtement protecteur.

Fig.1.

Fig.2.

Fig.3.

Fig.4.

Fig.5.